# EUROPÄISCHE PATENTSCHRIFT

(11) **EP 3 602 983 B1**
(45) Veröffentlichungstag und Bekanntmachung des Hinweises auf die Patenterteilung: **29.04.2020**
(21) Anmeldenummer: 17745256.2
(22) Anmeldetag: 11.07.2017
(51) Int. Cl.: H04L 25/49, H04L 12/40

(54) **ENERGIEEFFIZIENTER AUSTAUSCH VON DATENRAHMEN**
ENERGY-EFFICIENT EXCHANGE OF DATA FRAMES
ÉCHANGE EFFICACE EN ÉNERGIE DE TRAMES DE DONNÉES

(43) Veröffentlichungstag der Anmeldung: 05.02.2020
(73) Patentinhaber: INOVA Semiconductors GmbH, 81671 München (DE)
(72) Erfinder: NEUMANN, Roland, 81671 München (DE)
(74) Vertreter: Reich, Jochen
(86) Internationale Anmeldenummer: PCT/EP2017/000821
(87) Internationale Veröffentlichungsnummer: WO 2019/011392

(56) Entgegenhaltungen:
- WO-A1-2017/070595
- DE-A1-102015 222 504
- US-A1- 2008 205 454

## Beschreibung

Die vorliegende Erfindung ist gerichtet auf eine Kommunikationsanordnung zum energieeffizienten Austausch bzw. Übersenden von Datenrahmen zwischen einer Befehlseinheit und mehreren LED-Steuereinheiten. Ferner wird die Befehlseinheit an sich sowie die Steuereinheiten an sich vorgeschlagen, sowie ein Kommunikationsverfahren, welches die vorgeschlagene Kommunikationsanordnung betreibt. Ferner ist die vorliegende Erfindung gerichtet auf ein Computerprogrammprodukt mit Steuerbefehlen, welche das Verfahren ausführen bzw. die Kommunikationsanordnung betreiben. Erfindungsgemäß werden mehrere Maßnahmen geschickt derart kombiniert, dass ein sicherer und energieeffizienter Austausch von Daten zwischen Komponenten möglich ist.

WO 2017/070595 A1 zeigt ein Verfahren für ein elektronisches Endgerät mit mehreren Kommunikationsmodi.

DE 10 2015 222 504 A1 zeigt eine Beleuchtungsvorrichtung für ein Kraftfahrzeug, umfassend ein oder mehrere Verarbeitungsmodule sowie einen internen Datenbus und eine Vielzahl von LED-Einheiten.

US 2008/0205454 A1 zeigt ein Verfahren zum Übertragen serieller Datenrahmen.

Bekannt ist es, mehrere Leuchtdioden mit Steuereinheiten zu versehen und die entsprechenden Steuereinheiten in Serie zu schalten. Hierbei wird eine Befehlseinheit vorgesehen, die die Steuereinheiten mittels einer Adressierung anspricht. Ferner wird ein Datenstrom auf einer Kommunikationsleitung zwischen den einzelnen Einheiten erzeugt, der synchronisiert werden muss. Hierzu ist es bekannt diverse Schaltungen vorzusehen, welche den Datenstrom interpretieren und daraufhin den Datenstrom in logische Einheiten unterteilen können. Hierbei muss eine Vielzahl von Schaltungen verbaut werden, welche zudem aufwendig betrieben werden muss. So ist es besonders nachteilig, dass die entsprechenden Schaltungen Energie aufnehmen und gegebenenfalls aufgrund ihrer Vielzahl fehleranfällig sind. Insbesondere besteht hierbei ein hoher technischer Aufwand zur Interpretation des Datenstroms und zur Synchronisierung der Einheiten.

Generell ist eine serielle Kommunikation bekannt, wobei die Befehlseinheit mit den einzelnen Steuereinheiten derart kommuniziert, dass entweder Nutzdaten oder sogenannte Leerrahmen, sogenannte IDLE-Frames, übermittelt werden. Bei einem Leerrahmen handelt es sich um ein vorbestimmtes Bitmuster, welches einem Kommunikationsempfänger anzeigt, dass derzeit keine Nutzdaten gesendet werden. Ein Übersenden eines solchen Signals ist aufwendig und zudem fehleranfällig, da es möglich ist, dass auch in dem Leerrahmen Bits umkippen und somit ein nicht gewolltes Bitmuster entsteht. Somit ist dieses Verfahren fehleranfällig und energieaufwendig, da auch Informationen übermittelt werden, falls keine Zustandsänderung einer Leuchtdiode eintreten soll.

Ferner ist es bekannt zur Kommunikation mit Kommunikationspartnern Datenrahmen einzusetzen, welche einzelne Felder aufweisen. Hierbei werden typischerweise Felder konstanter Länge verwendet, die einem oder mehreren Bytes entsprechen. Hierbei hängt jedoch die Kodierung der entsprechenden Datenrahmen vom Anwendungsszenario ab und es wird typischerweise nicht auf vorhandene Hardwarekomponenten abgestellt. So gefährdet ein Vorhandensein eines zu geringen Speichers bereits den Erfolg eines Kommunikationsverfahrens, wobei bei zu großen Speicherräumen ein so genannter Überhang derart entsteht, dass einzelne Bits nicht genutzt werden.

Somit ist es gemäß dem Stand der Technik nachteilig, dass Bits verschwendet werden und insbesondere auch die Fehleranfälligkeit dadurch steigt, dass längere Datenströme fehleranfälliger und aufwendiger zu übertragen sind, als kurze Datenströme. Typischerweise werden vordefinierte Datenrahmen verwendet, welche für eine Vielzahl von Anwendungsszenarien konzipiert wurden. Gerade bei einer Kommunikation mit Steuereinheiten für Leuchtdioden, welche in Serie geschaltet sind, bestehen jedoch gesonderte Anforderungen. Beispielsweise werden solche Leuchtdioden in einem Automobil verbaut, welches elektrisch angetrieben ist. Somit wirkt sich die Stromaufnahme direkt auf die Reichweite des Fahrzeugs aus und ist somit von großer Bedeutung.

Es ist somit eine Aufgabe der vorliegenden Erfindung eine Kommunikationsanordnung zum energieeffizienten Austausch von Datenrahmen vorzuschlagen, welche besonders vorteilhaft in einem Automobil verbaut werden kann. Es ist ferner eine Aufgabe der vorliegenden Erfindung ein entsprechend eingerichtetes Kommunikationsverfahren vorzuschlagen, sowie eine Befehlseinheit und eine Steuereinheit zur Verwendung in dem vorgeschlagenen Kommunikationsverfahren bzw. in der vorgeschlagenen Kommunikationsanordnung. Ferner soll ein Computerprogrammprodukt mit Steuerbefehlen vorgeschlagen werden, welches das Verfahren ausführt bzw. die Kommunikationsanordnung betreibt.

Die Aufgabe wird gelöst mit den Merkmalen des Patentanspruchs 1. Weitere vorteilhafte Ausgestaltungen sind in den Unteransprüchen angegeben.

Demgemäß wird eine Kommunikationsanordnung zum energieeffizienten Austausch von Datenrahmen zwischen einer Befehlseinheit und daran seriell gekoppelter LED-Steuereinheiten vorgeschlagen, wobei die Befehlseinheit und die LED-Steuereinheiten eingerichtet sind, Datenrahmen in Abhängigkeit eines Umfangs eines unterstützten Befehlssatzes, der Anzahl der LED-Steuereinheiten und der verwendeten Parameter minimaler Länge zu erzeugen, eine Synchronisation der Kommunikation mittels im Datenrahmen eindeutig kodierter Steuerbefehle durchzuführen und ferner eingerichtet sind, zwischen einem Versenden von Datenrahmen bei einem laufenden Betrieb keine Signale zu übermitteln.

Die vorgeschlagene Kommunikationsanordnung weist unter anderem die Befehlseinheit und mehrere LED-Steuereinheiten auf, welche derart in Serie geschalteten sind, dass eine einzige Befehlseinheit vorgesehen ist, an die eine weitere LED-Steuereinheit angeschlossen ist. An diese weitere LED-Steuereinheit ist wiederum eine weitere LED-Steuereinheit angeschlossen, derart, dass sich eine Kette von Komponenten ergibt, die mit der Befehlseinheit beginnt und weitere LED-Steuereinheiten folgen. Die einzelnen Komponenten werden mittels einer Kommunikationsverbindung bzw. eines Kommunikationskanals oder einer Leitung elektrisch derart gekoppelt, dass Datensignale zwischen den Einheiten übertragen werden können. Hierzu erkennt der Fachmann, dass weitere Komponenten notwendig sind, insbesondere Schnittstellen. Die vorgeschlagenen Merkmale eignen sich insbesondere zur Verwendung in einem Automobil.

Mittels einer solchen Kommunikationsleitung werden Datenrahmen zwischen den Einheiten ausgetauscht, derart, dass ein Datenrahmen eine logische Abfolge von Signalen darstellt, welche Bits kodieren. Somit ist ein Datenrahmen im Kontext der vorliegenden Erfindung ein Bitstrom der mehrere logische Einheiten, auch als Felder bezeichnet, umfasst. Diesen Feldern ist jeweils eine bestimmte Semantik zugeordnet. Beispielsweise kann ein Befehlsfeld, ein Adressfeld und ein Datenfeld bzw. ein Parameterfeld vorgesehen werden. Mittels dieser Felder können die Informationen innerhalb der vorgeschlagenen Komponenten interpretiert werden und somit entsprechende Befehle übermittelt und entgegengenommen werden. Ein Austauschen von Datenrahmen beschreibt somit ein Übermitteln oder ein Senden und Empfangen von Datenrahmen.

Erfindungsgemäß ist es besonders vorteilhaft, dass die Datenrahmen mit minimaler Länge erzeugt werden. Somit ist eine Übertragung einfach zu bewerkstelligen und ist zudem weniger fehleranfällig als bei bekannten Verfahren. Hierbei wird auf einen unterstützten Befehlssatz abgestellt, der sowohl von der Befehlseinheit als auch von den LED-Steuereinheiten unterstützt wird. Somit implementieren die einzelnen Einheiten eine entsprechende Funktionalität, welche mittels der einzelnen Befehle abgerufen werden kann. Der Befehlssatz umfasst somit eine Menge von Befehlen, welche von der Befehlseinheit und/oder von den LED-Steuereinheiten umgesetzt werden kann. Der Umfang des Befehlssatzes entspricht somit der Kardinalität der Menge an Befehlen bzw. der Anzahl an unterstützten Befehlen. Beispielsweise ist dann der entsprechende Abschnitt des Datenrahmens minimal, falls lediglich so viele Bits verwendet werden, dass der entsprechende Wertebereich der Anzahl der Befehle gerade noch entspricht. Werden beispielsweise 16 Befehle unterstützt, so ist die entsprechende minimale Länge vorerst 4 Bits. Ferner ist jedoch die Bitfolge noch eindeutig auszugestalten, weshalb es vorteilhaft ist die 4 Bits auf 5 Bits abzubilden, wie es im Folgenden noch beschrieben wird. In diesem Beispiel ist somit die entsprechende minimale Länge letztendlich 5 Bits.

Die Anzahl der LED-Steuereinheiten stellt ebenfalls eine Anforderung an die minimale Länge des entsprechenden Datenrahmens. Auch hier wird wieder die Anzahl der in Serie geschalteten LED-Steuereinheiten bestimmt und hieraus wird die entsprechende Anzahl derart kodiert, dass keinerlei Bits zu viel verwendet werden. Sind beispielsweise 15 LED-Steuereinheiten in Serie geschaltet, so reichen wiederum 4 Bits aus, um eine Adressierung der LED-Steuereinheiten zu bewerkstelligen. Entspricht beispielsweise die Anzahl der LED-Steuereinheiten 13, so sind ebenfalls 4 Bits zu verwenden. Entspricht hingegen die Anzahl der LED-Steuereinheiten 20, so sind 5 Bits zu verwenden. Somit können also alle LED-Steuereinheiten mittels einer Adresse, welche in dem Datenrahmen kodiert ist, angesprochen werden, ohne dass hierbei unnötig Bits verschwendet werden.

In gleicher Weise werden die möglichen Parameter bestimmt und es wird hier ein Feld konstruiert, welches gerade groß genug ist, um die verwendeten Parameter zu kodieren. Somit entstehen also keinerlei Bits, welche bei der größtmöglichen Belegung des entsprechenden Felds stets leer bleiben.

Hierbei besteht jedoch zusätzlich die Anforderung, dass die minimale Länge nicht derart kurz sein darf, dass die Steuerbefehle nicht mehr eindeutig zu kodieren sind. Dies stellt insbesondere auch auf eine Mehrzahl von Datenrahmen ab, welche aneinandergehängt werden. Hierbei ist es möglich, dass mehrere Datenrahmen derart zusammengehängt werden, dass die einzelnen Steuerbefehle bzw. allgemein die Bitsequenzen nicht mehr eindeutig sind. So kann es sein, dass das Ende eines ersten Datenrahmens mit dem Anfang eines zweiten Datenrahmens derart verschmilzt, dass nicht identifizierbar ist, welcher logische Gehalt nunmehr kodiert ist. Hierzu können entsprechende Tabellen verwendet werden, welche erste Bitfolgen bestimmter Länge auf zweite Bitfolgen bestimmter Länge abbilden, derart, dass die Steuerbefehle eindeutig kodiert sind. Auf diese Weise ist es also möglich aus einem Bitstrom Steuerbefehle auszulesen, welche ein vorbestimmtes Bitmuster aufweisen. Dieses Bitmuster ist in der gesamten Kommunikation derart eindeutig, dass auch bei einem Aneinanderhängen von Datenrahmen ein solches Bitmuster eindeutig bleibt und somit eben auch die Steuerbefehle stets eindeutig kodiert sind.

Somit kann es also möglich sein, dass bei der minimalen Länge nicht nur die entsprechenden Speicherräume berücksichtigt werden müssen, welche benötigt werden, sondern vielmehr muss bei der minimalen Länge auch berücksichtigt werden, dass die Steuerbefehle stets eindeutig in einem Strom identifizierbar sind. Somit werden also an die minimale Länge der Datenrahmen zwei Anforderungen gestellt, welche kumuliert vorliegen müssen. Erstens dürfen keine Bits verschwendet werden und zweitens soll der kodierte Steuerbefehl auch bei einer Aneinanderreihung von Datenrahmen eindeutig bleiben.

Dies wird dadurch bewerkstelligt, dass vorerst die Datenrahmen mit vorläufig minimaler Länge bestimmt werden und dann beispielsweise empirisch ermittelt wird, ob diese minimale Länge ausreichend ist, die Steuerbefehle eindeutig zu kodieren. Ist dies nicht der Fall, so wird die vorläufige minimale Länge derart angepasst, dass die Steuerbefehle auf weitere Steuerbefehle abgebildet werden, welche typischerweise länger sind als die vorläufige minimale Länge, hierbei jedoch eindeutig sind. Solche Tabellen können entsprechend vor der Laufzeit ausgerechnet werden und bereitgestellt werden.

Somit ist es also erfindungsgemäß möglich eine besonders effiziente und somit eben auch energieeffiziente Kommunikation bereitzustellen und hierbei auf Schaltungen zu verzichten, die zur Synchronisation der Datenkommunikation notwendig wären. Dies ist deshalb der Fall, da die Steuerbefehle eindeutig kodiert sind und somit ein Empfänger stets einen Steuerbefehl identifizieren kann, ohne dass eine gesonderte Taktung notwendig wäre. Dies ist deshalb der Fall, da der Steuerbefehl eindeutig ist und somit bei einem vorbestimmten Bitmuster stets auf den entsprechenden Steuerbefehl geschlossen werden kann.

Ein zusätzliches erfindungsgemäßes Merkmal ist es, dass zwischen einem Versenden von Datenrahmen bei einem laufenden Betrieb keine Signale übermittelt werden. Somit ist es also möglich auf sogenannte Leerrahmen zu verzichten und es wird keine Energie benötigt. Sobald eine Zustandsänderung der einzelnen Komponenten eintreten soll oder ein Wert ausgelesen werden soll, wird wieder ein Datenrahmen mit Nutzdaten übersendet und die entsprechenden Steuerbefehl können übermittelt werden. Jedoch wird in besonders vorteilhafter Weise vermieden, dass die Kommunikationsanordnung stets Bitmuster verschickt, die anzeigen, dass keine Datenübertragung erfolgt. Dies wird im Stand der Technik durchgeführt, wobei jedoch dort nicht auf die Energieeffizienz abgestellt wird. Entsprechende Verfahren gemäß dem Stand der Technik gehen von einer gesicherten Energiebereitstellung aus, welche aus einem entsprechenden Stromnetz erfolgt.

Erfindungsgemäß ist es jedoch besonders vorteilhaft, dass die Kommunikationsanordnung beispielsweise auch in einem Automobil Verwendung finden kann, welches elektrisch angetrieben wird. Durch die Unterbindung von Leerrahmen, also Bitmuster, die anzeigen, dass keine Nutzdaten geschickt werden, wird erfindungsgemäß erreicht, dass die Reichweite eines elektrisch angetriebenen Autos nicht beeinträchtigt wird.

Gemäß einem Aspekt der vorliegenden Erfindung sind die Steuerbefehle ohne weitere Information eindeutig kodiert oder die Parameter sind eingerichtet nicht eindeutig kodierte Steuerbefehle mittels einer Zusatzinformation eindeutig zu kodieren. Dies hat den Vorteil, dass in jedem Fall eine eindeutige Kodierung der Steuerbefehle erreicht wird, wobei die Steuerbefehle aus sich heraus alleine eindeutig kodiert sind oder aber sie sind anfangs bzw. vorläufig nicht eindeutig kodiert und es werden zusätzliche Informationen zur eindeutigen Kodierung mittels Parametern bereitgestellt. So ist es erfindungsgemäß möglich eine Kategorie von Steuerbefehlen zu erstellen, welche untereinander nicht eindeutig kodiert sind. Hierzu wird eine Zusatzinformation in ein Parameterfeld kodiert, welches in einem Zusammenwirken mit den nicht eindeutig spezifizierten Steuerbefehlen diese eindeutig spezifiziert. So ist es möglich dass eine Gruppe von Steuerbefehlen eine gleiche Bitsequenz aufweist, wobei zu dieser nicht eindeutigen Bitsequenz Parameter bereitgestellt werden, welche dann in dem Zusammenwirken mit der nicht eindeutigen Kodierung jeden Steuerbefehl eindeutig spezifizieren. Generell wird jedem Steuerbefehl eine Bitsequenz zugewiesen, der ihn eindeutig beschreibt, sodass beispielsweise im Rahmen einer Durchnummerierung jeder Steuerbefehl seine eindeutige Bitfolge aufweist. Somit muss also nur die entsprechende Bitfolge übertragen werden und der Kommunikationsempfänger weiß welcher Steuerbefehl auszuführen ist.

Gemäß einem weiteren Aspekt der vorliegenden Erfindung sind die Datenrahmen minimaler Länge, falls bei dynamischer Datenrahmenlänge jedes zu übertragende Bit Nutzdaten kodiert oder bei statischer Datenrahmenlänge alle möglichen Bitbelegungen der Kommunikationsanordnung ohne Überhang kodierbar sind. Dies hat den Vorteil, dass sowohl eine dynamische, also eine flexible, Datenrahmenlänge unterstützt werden kann, sowie eine feste Datenrahmenlänge. Bei einer dynamischen Datenrahmenlänge werden nur so viel Bits übertragen, wie tatsächlich auch benötigt werden. Bei einer statischen Datenrahmenlänge wird die Datenrahmenlänge insgesamt einmalig bezüglich ihrer minimalen Länge spezifiziert und es wird stets diese feste Datenrahmenlänge verwendet. Hierbei wird ausgetestet, wie viele Bits maximal notwendig sind um alle Steuerbefehle, Adressen und Parameter zu spezifizieren. Hierauf wird die minimale Rahmenlänge festgelegt und stets verwendet, auch falls ein Datenfeld nicht voll ausgeschöpft wird. Unter einem Überhang wird vorliegend mindestens 1 Bit verstanden, welches unter der größtmöglichen vorhandenen Datenbelegung nicht verwendet wird. So umfasst der Datenrahmen beispielsweise ein Feld für Instruktionen, ein Feld für eine Adresse sowie ein Feld für Parameter. Hierbei werden der jeweils größte Steuerbefehl, die größte Adresse und der größte Parameter ausgewählt, die dann den größtmöglichen Datenrahmen bestimmen. Dieser Datenrahmen wird festgelegt, ohne dass weitere Bits vorgesehen werden. Somit wird also der Überhang vermieden.

Gemäß einem weiteren Aspekt der vorliegenden Erfindung werden nicht eindeutige Bitbelegungen auf eindeutige Bitbelegungen größerer Länge mittels einer Zuordnung abgebildet. Dies hat den Vorteil, dass vorläufig nicht eindeutige Bitbelegungen gewählt werden können, welche auf die tatsächlich vorhandene Kommunikationsanordnung abstellen. Stellt sich im Nachhinein heraus, dass die Bitbelegungen nicht eindeutig sind, so können diese nicht eindeutigen Bitbelegungen auf eindeutige Bitbelegungen abgebildet werden, derart, dass die minimale Länge der Bitbelegungen sowohl die vorhandene Hardware berücksichtigt, als auch die Anforderung, dass die entsprechenden Steuerbefehle eindeutig kodierbar sein müssen. Somit wird also eine größere Menge von Bitsequenzen in Kauf genommen, die jedoch eindeutige Bitsequenzen schafft.

Gemäß einem weiteren Aspekt der vorliegenden Erfindung liegt zwischen dem Versenden von Datenrahmen an Kommunikationskanälen zwischen der Befehlseinheit und den LED-Steuereinheiten im Wesentlichen keine Spannung an. Dies hat den Vorteil, dass Leerrahmen vermieden werden und somit keine Spannung bzw. Energie verwendet wird, falls keine Zustandsänderung einer LED-Steuereinheit notwendig ist. Somit fließt also nur ein Strom, falls tatsächlich eine Kommunikation stattfindet. Somit werden also Leerrahmen vermieden, die einem Empfänger anzeigen würden, dass keine Nutzdaten übermittelt werden. Dies kann erfindungsgemäß vermieden werden und es wird ein besonders energieeffizientes Verfahren bzw. eine Kommunikationsanordnung vorgeschlagen. Hierbei erkennt der Fachmann, dass "im Wesentlichen" als ein optionales Merkmal zu verstehen ist und dass es möglich ist, dass ungewollte Spannungen trotzdem entstehen, auch wenn keine Spannung aktiv angelegt wird.

Gemäß einem weiteren Aspekt der vorliegenden Erfindung sind die Datenrahmen in einer Abwärtsrichtung unterschiedlich zu Datenrahmen in einer Aufwärtsrichtung ausgestaltet. Dies hat den Vorteil, dass die Datenrahmen in Abhängigkeit ihrer Kommunikationsrichtung möglichst effizient gewählt werden können und dass somit eine Datenrahmenlänge in der Abwärtsrichtung unterschiedlich der Datenrahmenlänge der Aufwärtsrichtung gewählt werden kann. Somit wird also richtungsabhängig ein optimales Ergebnis dadurch gezielt, dass die entsprechenden Datenrahmen auf die entsprechenden Anforderungen Rücksicht nehmen können.

Gemäß einem weiteren Aspekt der vorliegenden Erfindung sind die Datenrahmen der Aufwärtsrichtung kürzer ausgestaltet, als Datenrahmen der Abwärtsrichtung. Dies hat den Vorteil, dass auf das Anwendungsszenario der Leuchtdioden Rücksicht genommen werden kann, derart, dass beispielsweise in einer Abwärtsrichtung die Farbe der Leuchtdioden mittels eines RBG-Codes eingestellt werden muss. Dies erfolgt erfindungsgemäß nur in der Abwärtsrichtung, und eben nicht in der Aufwärtsrichtung. Somit können hier Speicherbereiche eingespart werden und der Datenrahmen kann in der Aufwärtsrichtung effizienter, also kürzer, ausgestaltet werden als in der Abwärtsrichtung.

Gemäß einem weiteren Aspekt der vorliegenden Erfindung ist jeder der Steuerbefehle mit 4 oder 5 Bits kodiert. Dies hat den Vorteil, dass jeder Steuerbefehl innerhalb dieses Wertebereichs eindeutig spezifiziert werden kann und insbesondere wurde besonders überraschend herausgefunden, dass Leuchtdioden mit maximal 16 Befehlen derart angesprochen werden können, dass beispielsweise in einem Anwendungsszenario eines Automobils gängige Funktionen implementiert werden können. So ist es deshalb besonders vorteilhaft 4 Bits zu verwenden, da der gesamte Steuerbefehlssatz, welcher von Leuchtdioden-Steuereinheiten verwendet wird typischerweise nicht 16 Befehle übersteigt. Ist dies doch der Fall, so können erfindungsgemäß auch Parameter hinzu kodiert werden. Hierbei ist es jedoch nicht stets möglich eindeutige Bitfolgen zu erzeugen, weshalb es erfindungsgemäß besonders vorteilhaft ist 5 Bits zu verwenden. Somit werden Steuerbefehle, welche mit 4 Bits kodiert sind auf Steuerbefehle abgebildet, welche mittels 5 Bits kodiert sind. Somit ergibt sich eine eindeutige Abfolge von Steuerbefehlen, die auch insbesondere dann eindeutig ist, falls mehrere Datenrahmen aneinandergehängt werden. Somit ist es also insbesondere deshalb vorteilhaft 5 Bits zu verwenden, da hierbei eindeutige Datenrahmen erzeugt werden können bzw. eindeutige Steuerbefehle und insbesondere wird somit kein Bit verschwendet. Somit kann es sich also bei einer minimalen Länge eines Felds für Steuerbefehle um 5 Bits handeln.

Gemäß einem weiteren Aspekt der vorliegenden Erfindung sind die Parameter mit 24 oder 30 Bits kodiert. Dies hat den Vorteil, dass auch lange Parameter, wie beispielsweise ein RGB-Wert mittels der vorgeschlagenen Länge kodiert werden kann. Typischerweise braucht einen Farbcode 8 Bit, sodass bei drei Farben, beispielsweise rot, grün und blau 24 Bits entstehen. Da es jedoch wiederum nicht stets möglich ist aus 24 Bits, welche 3 Werte kodieren, einen eindeutigen Steuerbefehl zu erzeugen bzw. einen eindeutigen Datenrahmen, werden wiederum 30 Bits verwendet, derart, dass wiederum 4 Bits auf 5 Bits abgebildet werden. Somit werden also besonders vorteilhaft 30 Bits im vorliegenden Anwendungsszenario verwendet. Somit handelt es sich also bei 24 bzw. 30 Bits um die minimale Länge eines entsprechenden Parameterfelds.

Gemäß einem weiteren Aspekt der vorliegenden Erfindung sind die Befehlseinheit und die die Steuereinheiten eingerichtet, dem Datenrahmen eine Prüfinformation zur Sicherung der Übertragung anzuhängen. Dies hat den Vorteil, dass beispielsweise ein CRC-Code, zur zyklischen Redundanzprüfung, angehängt werden kann, derart dass festgestellt werden kann, ob eine Datenübertragung eines Datenrahmens erfolgreich war. Hierbei eignet sich auch generell eine Prüfsumme, um festzustellen, ob die Datenübertragung fehlerhaft war. Ist dies der Fall, so kann der Datenrahmen erneut übermittelt werden.

Gemäß einem weiteren Aspekt der vorliegenden Erfindung sind Datenrahmen der Abwärtsrichtung um 25 Prozent länger ausgestaltet, als Datenrahmen der Aufwärtsrichtung. Dies hat den Vorteil, dass die besonders vorteilhafte Kodierung der einzelnen Felder derart erfolgen kann, dass stets 4 Bits auf 5 Bits abgebildet werden. Somit entstehen also Datenrahmen minimaler Länge, welche dennoch eindeutig sind.

Die Aufgabe wird auch gelöst durch eine Befehlseinheit zur Kommunikation mit daran seriell gekoppelter LED-Steuereinheiten, wobei die Befehlseinheit eingerichtet ist, Datenrahmen in Abhängigkeit eines Umfangs eines unterstützten Befehlssatzes, der Anzahl der LED-Steuereinheiten und der verwendeten Parameter minimaler Länge zu erzeugen, eine Synchronisation der Kommunikation mittels im Datenrahmen eindeutig kodierter Steuerbefehle durchzuführen und ferner eingerichtet ist, zwischen einem Versenden von Datenrahmen bei einem laufenden Betrieb keine Signale zu übermitteln.

Die Aufgabe wird ferner gelöst durch seriell koppelbare Steuereinheiten bzw. eine LED-Steuereinheit zur Kommunikation mit einer Befehlseinheit und mit weiteren LED-Steuereinheiten, welche eingerichtet ist, Datenrahmen in Abhängigkeit eines Umfangs eines unterstützten Befehlssatzes, der Anzahl der LED-Steuereinheiten und der verwendeten Parameter minimaler Länge zu erzeugen, eine Synchronisation der Kommunikation mittels im Datenrahmen eindeutig kodierter Steuerbefehle durchzuführen und ferner eingerichtet ist, zwischen einem Versenden von Datenrahmen bei einem laufenden Betrieb keine Signale zu übermitteln.

Die Aufgabe wird gelöst durch ein Kommunikationsverfahren zum energieeffizienten Austausch von Datenrahmen, welches analog der entsprechenden Kommunikationsanordnung ausgestaltet ist.

Die Aufgabe wird ferner gelöst durch ein Computerprogrammprodukt mit Steuerbefehlen, welche das Verfahren ausführen, wenn sie auf einem Computer zur Ausführung gebracht werden bzw. die vorgeschlagene Kommunikationsanordnung betreiben oder aber auch die Befehlseinheit und/oder die LED-Steuereinheiten betreiben.

Erfindungsgemäß ist es besonders vorteilhaft, dass die Kommunikationsanordnung eingerichtet ist, das Kommunikationsverfahren auszuführen, bzw. das Kommunikationsverfahren eingerichtet ist, die Kommunikationsanordnung zu betreiben. Die vorgeschlagene Befehlseinheit sowie die vorgeschlagene LED-Steuereinheit können erfindungsgemäß in der Kommunikationsanordnung Verwendung finden bzw. diese Einheiten können zumindest teilweise das Kommunikationsverfahren betreiben. Somit werden also strukturelle Merkmale vorgeschlagen, welche in analoger Weise als Verfahrensschritte Niederschlag finden können. Entsprechend können Verfahrensschritte anhand struktureller Merkmale nachgebildet werden.

Weitere vorteilhafte Ausgestaltungen werden anhand der beigefügten Figuren näher erläutert. Es zeigen:
- Figur 1:: ein bekanntes Anwendungsszenario als Ausgangspunkt für die vorliegende Erfindung;
- Figur 2:: einen beispielhaften Datenrahmen in Abwärtsrichtung gemäß einem Aspekt der vorliegenden Erfindung;
- Figur 3:: einen Datenrahmen in Aufwärtsrichtung gemäß einem Aspekt der vorliegenden Erfindung;
- Figur 4:: Messergebnisse, welche gemäß einem Vorteil der vorliegenden Erfindung zu erzielen sind;
- Figur 5:: einen Datenrahmen mit Datenfeldern gemäß einem Aspekt der vorliegenden Erfindung; und
- Figur 6:: ein schematisches Ablaufdiagramm eines Kommunikationsverfahrens gemäß einem Aspekt der vorliegenden Erfindung.

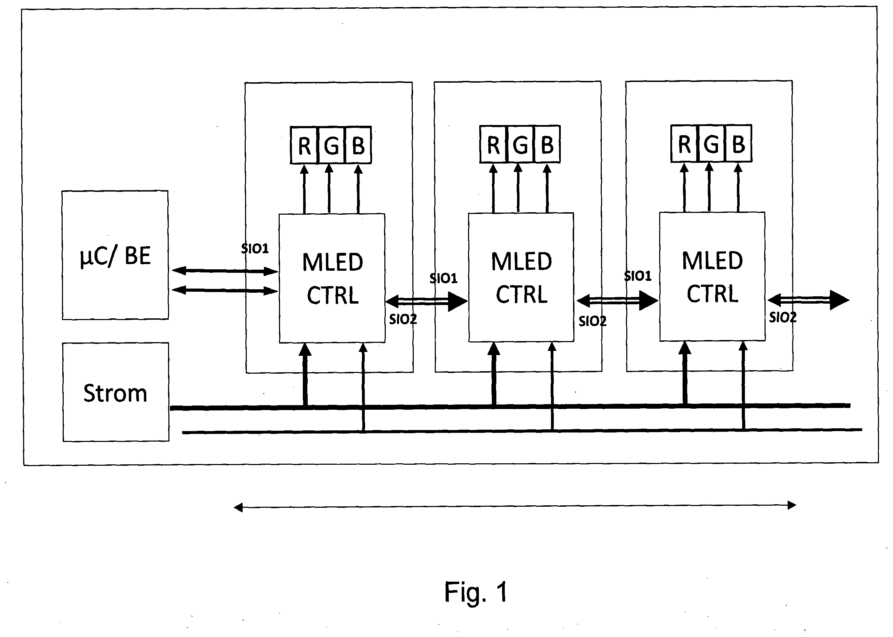

Figur 1 zeigt eine Kommunikationsanordnung, wie sie beispielsweise der vorliegenden Erfindung zugrunde liegen kann. Eine solche Kommunikationsanordnung ist bereits bekannt, wobei diese Kommunikationsanordnung mit wenig technischem Aufwand derart angepasst werden kann, dass sie der erfindungsgemäßen Kommunikationsanordnung entspricht. Hierbei sind insbesondere Datenrahmen derart zu gestalten, wie sie erfindungsgemäß vorgeschlagen werden. Ferner ist sicherzustellen, dass keine Leerrahmen versendet werden, wie es in herkömmlichen Verfahren vorgeschlagen wird. Zwar sind generell erfindungsgemäß weitere Komponenten vorzusehen, wobei jedoch auf Schaltungen zur Synchronisation der Kommunikation verzichtet werden kann, da erfindungsgemäß eindeutige Steuerbefehle übermittelt werden.

In der vorliegenden Figur 1 ist auf der linken Seite ein Mikrocontroller eingezeichnet, der als eine Befehlseinheit BE vorliegen kann. Auf der rechten Seite des Mikrokontrollers sind LED-Steuereinheiten CTRL angeschlossen, welche einzelne Leuchtdioden ansteuern. Die einzelnen Leuchtdioden sind oben angeordnet und können beispielsweise mittels einzelner Leuchtdiodeneinheiten ein Mischverhältnis eines roten R, eines grünen G und eines blauen B Lichts einen bestimmten Farbton erzeugen. Ebenfalls ist in der vorliegenden Figur 1 ersichtlich, dass die Steuereinheiten derart in Serie geschaltet sind, dass eine Befehlseinheit auf der linken Seite vorgesehen ist und zudem weitere Steuereinheiten auf der rechten Seite der Befehlseinheit angeordnet sind, derart, dass alle Komponenten in Serie geschaltet sind. Dies erfolgt mittels mindestens eines Kommunikationskanals. Hierbei ist die Befehlseinheit eingerichtet entsprechende Datenrahmen zu erzeugen und diese an die Steuereinheiten weiterzureichen. Die einzelnen Steuereinheiten CTRL erzeugen wiederum eigene Datenrahmen oder leiten die empfangenen Datenrahmen weiter. Somit werden zwischen den einzelnen Komponenten Datenrahmen ausgetauscht. Ein Austauschen stellt hierbei auf ein Übermitteln der Datenrahmen ab.

Sowohl die Befehlseinheit BE als auch die Steuereinheiten CTRL unterstützen einen bestimmten Befehlssatz, der beispielsweise Befehle umfasst, die ein Übermitteln eines Farbwerts veranlassen. So kann die Befehlseinheit einen Befehl ausgeben, dass für eine bestimmte Adresse, also eine bestimmte Leuchtdiode bzw. Steuereinheit, ein bestimmter Farbwert einzustellen ist. Da der Farbwert mittels eines Mischens von rot, grün und blau erzeugt wird, können beispielsweise Parameter mittels 3 Bytes, also 24 Bits, übermittelt werden. Da diese jeweils 8 Bits eventuell nicht eindeutig kodierbar sind, werden diese jeweils 8 Bits auf 10 Bits abgebildet, da hierdurch eine eindeutige Bitsequenz entsteht. Somit werden also drei Felder innerhalb des Datenrahmens übermittelt, nämlich ein Befehlsfeld, ein Adressfeld und ein Parameterfeld.

Das Befehlsfeld kann beispielsweise eine Bitsequenz aufweisen, die eine Nummer eines Befehls angibt. Vorliegend ist dieser Befehl ein Einstellen des entsprechenden Mischwerts der Leuchtdiode. Ferner kann ein Adressfeld vorgesehen sein, welches angibt, welche der in Serie geschalteten Leuchtdioden bzw. Leuchtdiode angesprochen werden soll. Hierbei wird stets die Steuereinheit direkt angesprochen, welche dann die Leuchtdiode einstellt. Ferner kann ein Parameterfeld vorgesehen werden, welches die konkreten Farbwerte spezifiziert.

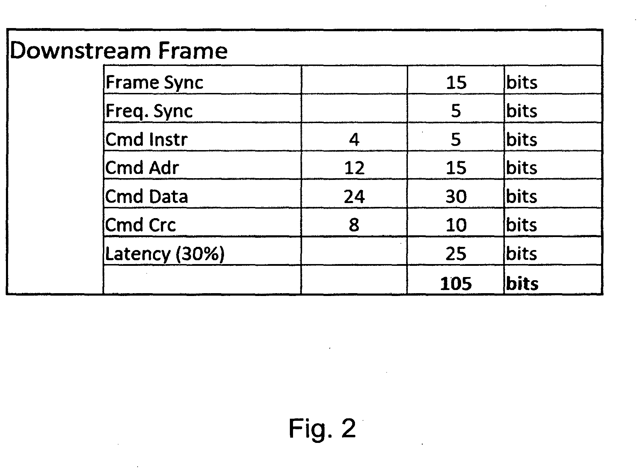

Figur 2 zeigt einen entsprechenden Rahmen, wie er stromabwärts gesendet wird. In der vorliegenden Erfindung wird, wie üblich, davon ausgegangen, dass die Richtung ausgehend von der Befehlseinheit BE, vorliegend nach rechts eine Abwärtsrichtung ist und eine Richtung ausgehend von den Steuereinheiten CTRL in Richtung der Befehlseinheit BE eine Aufwärtsrichtung ist. So zeigt also Figur 1 eine Abwärtsrichtung von links nach rechts und eine Aufwärtsrichtung von rechts nach links. Somit zeigt also Figur 2 einen Datenrahmen, welcher in der vorliegenden Figur 1 von links nach rechts übermittelt wird mitsamt Beispielswerten für eine minimale Länge des Datenrahmens. Vorliegend sind beispielsweise 4 Bits für einen Befehl vorgesehen, 12 Bits für eine Leuchtdiodenadresse bzw. eine Adresse einer Steuereinheit, 24 Bits für die Parameter bzw. Daten, und optional 8 Bits für eine Prüfsumme.

Da jedoch 4 Bits nicht eindeutig kodiert werden können, werden diese 4 Bits erfindungsgemäß auf 5 Bits erweitert, derart, dass jeder Bitsequenz von 4 Bit eine Bitsequenz von 5 Bits zugeordnet wird. Dies erfolgt erfindungsgemäß mittels einer Tabelle, welche vor einem Betreiben der Kommunikationsanordnung bereitgestellt wird. Diese lässt sich errechnen bzw. empirisch ermitteln.

Da erfindungsgemäß 16 Steuerbefehle ausreichend sind, wird hierzu eine Feldlänge von 4 Bits vorgeschlagen, welche auf 5 Bits erweitert wird. Somit handelt es sich bei der linken Wertspalte um eine Nettodatenrate und bei der rechten Wertspalte um eine Bruttodatenrate. Entsprechend werden 12 Bits auf 15 Bits erweitert, 24 Bits auf 30 Bits erweitert und 8 Bits auf 10 Bits erweitert. Somit stellt sich erfindungsgemäß für 16 Steuerbefehle, 4.096 Steuereinheiten, 3 Bytes Farbwerte und 8 Bits Prüfsumme jeweils eine Feldlänge von 5, 15, 30 und 10 Bits ein. Aufaddiert ergibt sich somit eine minimale Datenrahmenlänge von 60 Bits. Somit wurde also die minimale Länge eines Datenrahmens errechnet, wobei dennoch eine eindeutige Kodierung der Steuerbefehle möglich ist.

Hierbei ist in der vorliegenden Tabelle zu erkennen, dass ein entsprechender Datenrahmen optional weitere Felder umfassen kann, welche zusätzliche Informationen kodieren.

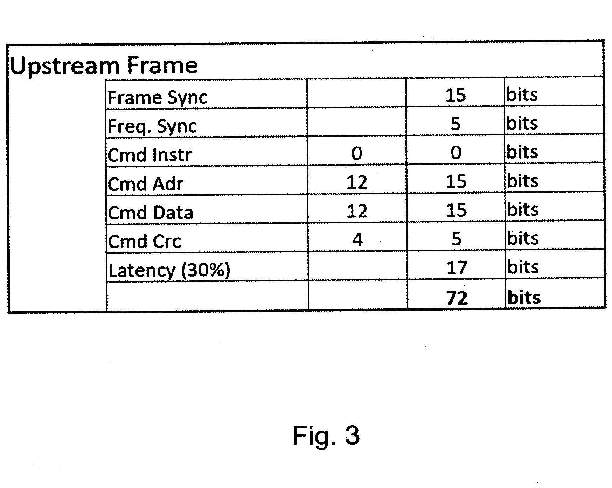

Figur 3 zeigt einen Datenrahmen, welcher in einer Aufwärtsrichtung versendet wird. Hierbei ist es erfindungsgemäß möglich die Datenrahmenlänge niedriger einzustellen, da keine Farbwerte der Leuchtdioden übermittelt werden müssen. Bei diesen Parameterwerten handelt es sich um die längsten Parameterwerte, welche in der Aufwärtsrichtung eingespart werden können. Ebenfalls müssen keine Befehle in der Aufwärtsrichtung übermittelt werden, da es sich bei der Aufwärtsrichtung typischerweise lediglich um ein Auslesen von Statusinformationen der Leuchtdioden handelt. Somit kann also ein entsprechendes Feld für Steuerbefehle 0 Bits betragen. Somit kann auch insgesamt die Prüfsumme reduziert werden.

Somit ist klar erkennbar, dass sich erfindungsgemäß der Vorteil einstellt, dass jeweils pro Richtung die minimalen Datenrahmenlängen gewählt werden können und insgesamt also eine effiziente und stromsparende Kommunikation möglich ist. Aufgrund der kurzen Bitsequenzen ist die vorgeschlagene Kommunikationsanordnung zudem besonders fehlerrobust.

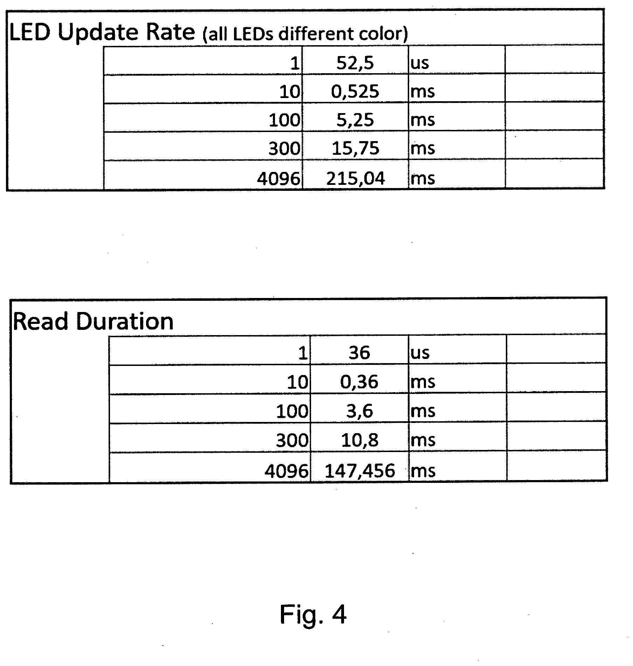

Figur 4 verdeutlicht die entsprechenden Datenraten, welche erfindungsgemäß erreicht werden können. So ist in der linken Spalte die Anzahl der Steuereinheiten eingetragen, in der mittleren Spalte die Zeitwerte und in der rechten Spalte die Zeiteinheit. So ist es besonders vorteilhaft, dass beispielsweise bei 4.096 Steuereinheiten und somit 4.096 Leuchtdioden eine Aktualisierungsrate von 215 ms erreicht werden kann. Entsprechend kann eine Lesedauer von 147 ms erreicht werden.

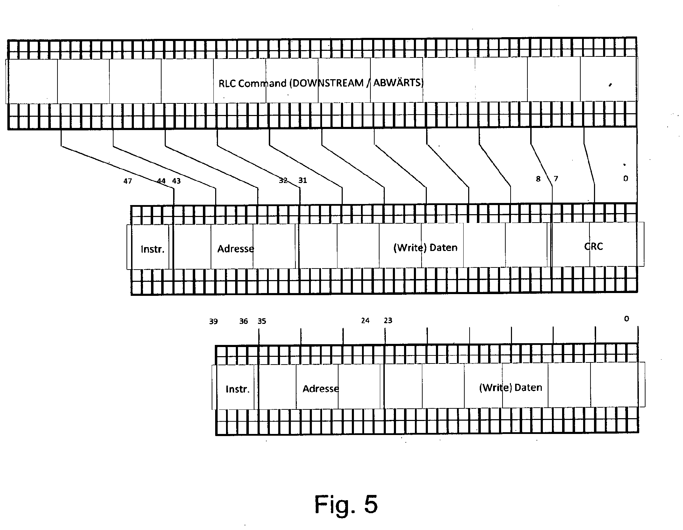

Figur 5 zeigt einen Datenrahmen, welcher diverse Datenfelder aufweist. Erfindungsgemäß ist in der zweiten Zeile gezeigt, dass ein linkes Feld für Steuerbefehle vorgesehen ist, darauf folgt rechts ein Adressfeld, worauf rechts ein Parameterfeld bzw. Datenfeld folgt und ferner ein Feld für eine Prüfinformation. Erfindungsgemäß ist es besonders vorteilhaft, dass die einzelnen Felder für sich jeweils mit minimaler Länge ausgestaltet werden, derart, dass sich bei einem auf Addieren der einzelnen Felder eben auch eine minimale Länge des Datenrahmens insgesamt ergibt. Hierbei ist es trotz der minimalen Länge der Bitsequenzen möglich, die Steuerbefehle eindeutig zu kodieren. Somit wird sichergestellt, dass bei aufeinanderfolgenden Datenrahmen die bereitgestellten Informationen stets eindeutig sind. Hierdurch wird wiederum ein Hardwareaufwand vermieden, da eine Synchronisation mittels eindeutiger Steuerbefehle erfolgt.

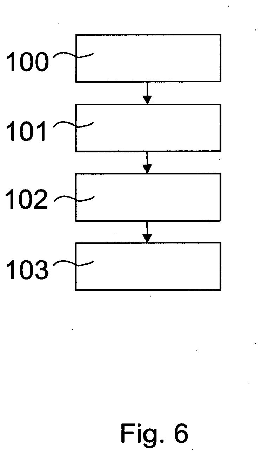

Figur 6 zeigt ein schematisches Ablaufdiagramm des erfindungsgemäßen Kommunikationsverfahrens zum energieeffizienten Austausch von Datenrahmen zwischen einer Befehlseinheit und daran seriell gekoppelter LED-Steuereinheiten, wobei die Befehlseinheit und die LED-Steuereinheiten eingerichtet werden, Datenrahmen in Abhängigkeit eines Umfangs eines unterstützten Befehlssatzes, der Anzahl der LED-Steuereinheiten und der verwendeten Parameter minimaler Länge zu erzeugen 100, eine Synchronisation der Kommunikation mittels im Datenrahmen eindeutig kodierter Steuerbefehle durchgeführt wird 101 und ferner zwischen einem Versenden 102 von Datenrahmen bei einem laufenden Betrieb keine Signale übermittelt werden 103. Der Fachmann erkennt hierbei, dass das vorgeschlagene Verfahren weitere Verfahrensschritte umfassen kann und insbesondere, dass die einzelnen Verfahrensschritte iterativ und/oder in anderer Reihenfolge ausgeführt werden können.

Das eindeutige Kodieren bezieht sich auf Steuerbefehle und optional auf alle weiteren Datenfelder. Somit werden Datenrahmen in Abhängigkeit eines Umfangs eines unterstützten Befehlssatzes, der Anzahl der LED-Steuereinheiten und der verwendeten Parameter eindeutig kodiert. Ebenfalls optional werden die einzelnen Felder eindeutig kodiert.

Die vorliegende Erfindung findet vorzugsweise in einem Automobil Einsatz, welches elektrisch angetrieben ist. Somit wirkt sich die niedrige Stromaufnahme direkt auf die Reichweite des Fahrzeugs aus und ist somit besonders vorteilhaft.

Das Computerprogrammprodukt umfasst Steuerbefehle, welche das Verfahren ausführen, wenn sie auf einem Computer zur Ausführung gebracht werden bzw. die vorgeschlagene Kommunikationsanordnung betreiben oder aber auch die Befehlseinheit und/oder die LED-Steuereinheiten betreiben. Hierbei kann das Computerprogrammprodukt in Form eines Moduls bereitgestellt werden, welches beispielsweise in der Kommunikationsanordnung verbaut ist. Als Computer ist hierbei jegliche Recheneinheit zu verstehen, insbesondere auch eine Anordnung mit einem Mikrokontroller. Das erfindungsgemäß Kommunikationsverfahren kann auch als ein Kommunikationsprotokoll bereitgestellt werden, welches auf einem Speichermedium bereitgestellt wird.

## Patentansprüche

1. Kommunikationsanordnung zum energieeffizienten Austausch von Datenrahmen zwischen einer Befehlseinheit (BE) und daran seriell gekoppelter LED-Steuereinheiten (CTRL), wobei die Befehlseinheit (BE) und die LED-Steuereinheiten (CTRL) eingerichtet sind, Datenrahmen in Abhängigkeit eines Umfangs eines unterstützten Befehlssatzes, der Anzahl der LED-Steuereinheiten (CTRL) und der verwendeten Parameter minimaler Länge zu erzeugen, eine Synchronisation der Kommunikation mittels eindeutig kodierter Steuerbefehle durchzuführen und ferner eingerichtet sind, zwischen einem Versenden von Datenrahmen bei einem laufenden Betrieb keine Signale zu übermitteln, wobei die Datenrahmen minimaler Länge sind, falls bei dynamischer Datenrahmenlänge jedes zu übertragende Bit Nutzdaten kodiert oder bei statischer Datenrahmenlänge alle möglichen Bitbelegungen der Kommunikationsanordnung ohne Überhang kodierbar sind.

2. Kommunikationsanordnung nach Anspruch 1, **dadurch gekennzeichnet, dass** die Steuerbefehle ohne weitere Information eindeutig kodiert sind oder die Parameter eingerichtet sind, nicht eindeutig kodierte Steuerbefehle mittels einer Zusatzinformation eindeutig zu kodieren.

3. Kommunikationsanordnung nach Anspruch 1 oder 2, **dadurch gekennzeichnet, dass** nicht eindeutige Bitbelegungen auf eindeutige Bitbelegungen größerer Länge mittels einer Zuordnung abgebildet werden.

4. Kommunikationsanordnung nach einem der vorhergehenden Ansprüche, **dadurch gekennzeichnet, dass** zwischen dem Versenden von Datenrahmen an Kommunikationskanälen zwischen der Befehlseinheit (BE) und den LED-Steuereinheiten (CTRL) im Wesentlichen keine Spannung anliegt.

5. Kommunikationsanordnung nach einem der vorhergehenden Ansprüche, **dadurch gekennzeichnet, dass** die Datenrahmen in einer Abwärtsrichtung unterschiedlich zu Datenrahmen in einer Aufwärtsrichtung ausgestaltet sind.

6. Kommunikationsanordnung nach einem der vorhergehenden Ansprüche, **dadurch gekennzeichnet, dass** die Datenrahmen der Aufwärtsrichtung kürzer ausgestaltet sind, als Datenrahmen der Abwärtsrichtung.

7. Kommunikationsanordnung nach einem der vorhergehenden Ansprüche, **dadurch gekennzeichnet, dass** jeder der Steuerbefehle mit 4 oder 5 Bits kodiert ist.

8. Kommunikationsanordnung nach einem der vorhergehenden Ansprüche, **dadurch gekennzeichnet, dass** die Parameter mit 24 oder 30 Bits kodiert sind.

9. Kommunikationsanordnung nach einem der vorhergehenden Ansprüche, **dadurch gekennzeichnet, dass** die Befehlseinheit (BE) und die LED-Steuereinheiten (CTRL) eingerichtet sind, dem Datenrahmen eine Prüfinformation zur Sicherung der Übertragung anzuhängen.

10. Kommunikationsanordnung nach einem der vorhergehenden Ansprüche, **dadurch gekennzeichnet, dass** Datenrahmen der Abwärtsrichtung um 25 Prozent länger ausgestaltet sind, als Datenrahmen der Aufwärtsrichtung.

11. Befehlseinheit (BE) zur Kommunikation mit daran seriell gekoppelter LED-Steuereinheiten (CTRL), wobei die Befehlseinheit (BE) eingerichtet ist, Datenrahmen in Abhängigkeit eines Umfangs eines unterstützten Befehlssatzes, der Anzahl der LED-Steuereinheiten (CTRL) und der verwendeten Parameter minimaler Länge zu erzeugen, eine Synchronisation der Kommunikation mittels eindeutig kodierter Steuerbefehle durchzuführen und ferner eingerichtet ist, zwischen einem Versenden von Datenrahmen bei einem laufenden Betrieb keine Signale zu übermitteln, wobei die Datenrahmen minimaler Länge sind, falls bei dynamischer Datenrahmenlänge jedes zu übertragende Bit Nutzdaten kodiert oder bei statischer Datenrahmenlänge alle möglichen Bitbelegungen der Kommunikationsanordnung ohne Überhang kodierbar sind.

12. Seriell koppelbare LED-Steuereinheit zur Kommunikation mit einer Befehlseinheit (BE) und mit LED-Steuereinheiten (CTRL), welche eingerichtet ist, Datenrahmen in Abhängigkeit eines Umfangs eines unterstützten Befehlssatzes, der Anzahl der LED-Steuereinheiten (CTRL) und der verwendeten Parameter minimaler Länge zu erzeugen, eine Synchronisation der Kommunikation mittels eindeutig kodierter Steuerbefehle durchzuführen und ferner eingerichtet ist, zwischen einem Versenden von Datenrahmen bei einem laufenden Betrieb keine Signale zu übermitteln, wobei die Datenrahmen minimaler Länge sind, falls bei dynamischer Datenrahmenlänge jedes zu übertragende Bit Nutzdaten kodiert oder bei statischer Datenrahmenlänge alle möglichen Bitbelegungen der Kommunikationsanordnung ohne Überhang kodierbar sind.

13. Kommunikationsverfahren zum energieeffizienten Austausch von Datenrahmen zwischen einer Befehlseinheit (BE) und daran seriell gekoppelter LED-Steuereinheiten (CTRL), wobei die Befehlseinheit (BE) und die LED-Steuereinheiten (CTRL) eingerichtet werden, Datenrahmen in Abhängigkeit eines Umfangs eines unterstützten Befehlssatzes, der Anzahl der LED-Steuereinheiten (CTRL) und der verwendeten Parameter minimaler Länge zu erzeugen (100), eine Synchronisation der Kommunikation mittels eindeutig kodierter Steuerbefehle durchgeführt wird (101) und ferner zwischen einem Versenden (102, 104) von Datenrahmen bei einem laufenden Betrieb keine Signale übermittelt werden (103), wobei die Datenrahmen minimaler Länge sind, falls bei dynamischer Datenrahmenlänge jedes zu übertragende Bit Nutzdaten kodiert oder bei statischer Datenrahmenlänge alle möglichen Bitbelegungen der Kommunikationsanordnung ohne Überhang kodierbar sind.

14. Computerprogrammprodukt mit Steuerbefehlen, welche das Verfahren nach Anspruch 13 ausführen, wenn sie auf einem oder mehreren Computern zur Ausführung gebracht werden.

## Claims

1. Communication arrangement for energy-efficient exchange of data frames between a control unit (BE) and LED control units (CTRL) coupled thereto in series, wherein the command unit (BE) and the LED control units (CTRL) being set up to generate data frames as a function of a scope of a supported command set, the number of LED control units (CTRL) and the used parameters of minimum length, and to synchronise the communication using control commands coded unambiguously in the data frame, and further being set up to transmit no signals during ongoing operation between sending of data frames, wherein the data frames are of minimum length if, for a dynamic data frame length, each bit to be transmitted codes payload data or, for a static data frame length, all possible bit occupancies of the communication arrangement can be coded without an overhang.

2. Communication arrangement according to claim 1, **characterized in that** the control commands are coded unambiguously without further information, or the parameters are set up to code ambiguously coded control commands unambiguously using additional information.

3. Communication arrangement according to claims 1 or 2, **characterized in that** ambiguous bit occupancies are mapped to unambiguous bit occupancies of greater length using an allocation.

4. Communication arrangement according to any of the preceding claims, **characterized in that** between sending of data frames there is substantially no voltage on communication channels between the command unit (BE) and the LED control units (CTRL).

5. Communication arrangement according to any of the preceding claims, **characterized in that** the data frames in a downward direction are configured differently from data frames in an upward direction.

6. Communication arrangement according to any of the preceding claims, **characterized in that** the data frames of the upward direction are configured shorter than data frames of the downward direction.

7. Communication arrangement according to any of the preceding claims, **characterized in that** each of the control commands is coded with 4 or 5 bits.

8. Communication arrangement according to any of the preceding claims, **characterized in that** the parameters are coded with 24 or 30 bits.

9. Communication arrangement according to any of the preceding claims, **characterized in that** the command unit (BE) and the control units (CTRL) are set up to string test information for securing the transmission onto the data frame.

10. Communication arrangement according to any of the preceding claims, **characterized in that** data frames of the downward direction are made 25 percent longer than data frames of the upward direction.

11. Command unit (BE) for communication with LED control units (CTRL) coupled thereto in series, wherein the command unit (BE) being set up to generate data frames as a function of a scope of a supported command set, the number of LED control units (CTRL) and the used parameters of minimum length, and to synchronise the communication using control commands coded unambiguously in the data frame, and further being set up to transmit no signals during ongoing operation between sending of data frames, wherein the data frames are of minimum length if, for a dynamic data frame length, each bit to be transmitted codes payload data or, for a static data frame length, all possible bit occupancies of the communication arrangement can be coded without an overhang.

12. LED control unit, which can be coupled in series for communication with a command unit (BE) and with further LED control units (CTRL), which is set up to generate data frames as a function of a scope of a supported command set, the number of LED control units (CTRL) and the used parameters of minimum length, and to synchronise the communication using control commands coded unambiguously in the data frame, and is further set up to transmit no signals during ongoing operation between sending of data frames, wherein the data frames are of minimum length if, for a dynamic data frame length, each bit to be transmitted codes payload data or, for a static data frame length, all possible bit occupancies of the communication arrangement can be coded without an overhang.

13. Communication method for energy-efficient exchange of data frames between a control unit (BE) and LED control units (CTRL) coupled thereto in series, wherein the command unit (BE) and the LED control units (CTRL) being set up to generate (100) data frames as a function of a scope of a supported command set, the number of LED control units (CTRL) and the used parameters of minimum length, the communication being synchronised (101) using control commands coded unambiguously in the data frame, and further no signals being transmitted (103) during ongoing operation between sending (102, 104) of data frames, wherein the data frames are of minimum length if, for a dynamic data frame length, each bit to be transmitted codes payload data or, for a static data frame length, all possible bit occupancies of the communication arrangement can be coded without an overhang.

14. Computer program product comprising control commands which carry out the method according to claim 13 when they are executed on a computer or several computers.

## Revendications

1. Système de communication pour l'échange efficace en énergie de trames de données entre une unité d'instruction (BE) et des unités de commande de DEL (CTRL) couplées en série à celle-ci, l'unité d'instruction (BE) et les unités de commande de DEL (CTRL) étant configurées pour générer des trames de données de longueur minimale en fonction de la taille d'un jeu d'instructions pris en charge, du nombre des unités de commande de DEL (CTRL) et des paramètres utilisés, exécuter une synchronisation de la communication au moyen d'instructions de commande codées de manière univoque et sont en outre configurées pour, en cours de fonctionnement, ne pas transmettre de signal entre des envois de trames de données, les trames de données étant de longueur minimale, si, pour une longueur dynamique de trame de données, chaque bit à transmettre code des données utiles ou, pour des longueurs statiques de trame de données, toutes les affectations possibles des bits du système de communication peuvent être codées sans excédent.

2. Système de communication selon la revendication 1, **caractérisé en ce que** les instructions de commande sont codées de manière univoque sans autre information ou les paramètres sont configurés pour coder de manière univoque les instructions de commande non codées de manière univoque au moyen d'une information supplémentaire.

3. Système de communication selon la revendication 1 ou 2, **caractérisé en ce que** des affectations des bits non univoques sont représentées sur des affectations des bits univoques de longueur supérieure au moyen d'une association.

4. Système de communication selon l'une des revendications précédentes, **caractérisé en ce que**, entre les envois de trames de données, sensiblement aucune tension n'est appliquée sur les canaux de communication entre l'unité d'instruction (BE) et les unités de commande de DEL (CTRL).

5. Système de communication selon l'une des revendications précédentes, **caractérisé en ce que** les trames de données sont conçues dans une direction descendante différemment de trames de données dans une direction montante.

6. Système de communication selon l'une des revendications précédentes, **caractérisé en ce que** les trames de données de la direction montante sont conçues plus courtes que des trames de données de la direction descendante.

7. Système de communication selon l'une des revendications précédentes, **caractérisé en ce que** chacune des instructions de commande est codée avec 4 ou 5 bits.

8. Système de communication selon l'une des revendications précédentes, **caractérisé en ce que** les paramètres sont codés avec 24 ou 30 bits.

9. Système de communication selon l'une des revendications précédentes, **caractérisée en ce que** l'unité d'instruction (BE) et les unités de commande de DEL (CTRL) sont configurées pour joindre à la trame de données une information de contrôle pour la sécurisation de la transmission.

10. Système de communication selon l'une des revendications précédentes, **caractérisé en ce que** des trames de données de la direction descendante sont conçues plus longues de 25 % que des trames de données de la direction montante.

11. Unité d'instruction (BE) destinée à la communication avec des unités de commande de DEL (CTRL) couplées en série à celle-ci, l'unité d'instruction (BE) étant configurée pour générer des trames de données de longueur minimale en fonction de la taille d'un jeu d'instructions pris en charge, du nombre des unités de commande de DEL (CTRL) et des paramètres utilisés, exécuter une synchronisation de la communication au moyen d'instructions de commande codées de manière univoque et est en outre configurée pour, en cours de fonctionnement, ne pas transmettre de signal entre des envois de trames de données, les trames de données étant de longueur minimale si, pour une longueur dynamique de trame de données, chaque bit à transmettre code des données utiles ou, pour des longueurs statiques de trame de données, toutes les affectations possibles des bits du système de communication peuvent être codées sans excédent.

12. Unité de commande de DEL pouvant être couplée en série et destinée à la communication avec une unité d'instruction (BE) et avec des unités de commande de DEL (CTRL), qui est configurée pour générer des trames de données de longueur minimale en fonction de la taille d'un jeu d'instructions pris en charge, du nombre des unités de commande de DEL (CTRL) et des paramètres utilisés, exécuter une synchronisation de la communication au moyen d'instructions de commande codées de manière univoque et est en outre configurée pour, en cours de fonctionnement, ne pas transmettre de signal entre des envois de trames de données, les trames de données étant de longueur minimale si, pour une longueur dynamique de trame de données, chaque bit à transmettre code des données utiles ou, pour des longueurs statiques de trame de données, toutes les affectations possibles des bits du système de communication peuvent être codées sans excédent.

13. Procédé de communication pour l'échange efficace en énergie de trames de données entre une unité d'instruction (BE) et des unités de commande de DEL (CTRL) couplées en série à celle-ci, dans lequel l'unité d'instruction (BE) et les unités de commande de DEL (CTRL) sont configurées pour générer (100) des trames de données de longueur minimale en fonction de la taille d'un jeu d'instructions pris en charge, du nombre des unités de commande de DEL (CTRL) et des paramètres utilisés, une synchronisation de la communication est exécutée (101) au moyen d'instructions de commande codées de manière univoque et aucun signal n'est en outre transmis, en cours de fonctionnement, entre des envois (102, 104) de trames de données, les trames de données étant de longueur minimale, si, pour une longueur dynamique de trame de données, chaque bit à transmettre code des données utiles ou, pour des longueurs statiques de trame de données, toutes les affectations possibles des bits du système de communication peuvent être codées sans excédent.

14. Produit programme informatique comprenant des instructions de commande, qui exécutent le procédé selon la revendication 13 quand elles sont mises en exécution sur un ou plusieurs ordinateurs.
